(19) Europäisches Patentamt
European Patent Office
Office européen des brevets

(11) **EP 4 290 246 A1**

(12) # EUROPÄISCHE PATENTANMELDUNG

(43) Veröffentlichungstag:
**13.12.2023 Patentblatt 2023/50**

(21) Anmeldenummer: **22177710.5**

(22) Anmeldetag: **08.06.2022**

(51) Internationale Patentklassifikation (IPC):
***G01R 21/133*** *(2006.01)* ***G06K 9/00*** *(2022.01)*
***G06Q 50/06*** *(2012.01)* *H02J 3/00* *(2006.01)*

(52) Gemeinsame Patentklassifikation (CPC):
**G06F 18/00; G06Q 50/06;** H02J 3/003;
H02J 2203/20; H02J 2310/70

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
- **MÜLLER, Katrin Dr.**
  **10713 Berlin (DE)**
- **THIEM, Sebastian Dr.**
  **91413 Neustadt an der Aisch (DE)**
- **CHISTYAKOV, Yury**
  **197373 St. Petersburg (RU)**

(74) Vertreter: **Siemens Patent Attorneys**
**Postfach 22 16 34**
**80506 München (DE)**

(54) **VERFAHREN ZUR KLASSIFIZIERUNG EINES LASTPROFILS**

(57) Es wird ein Verfahren zur Klassifizierung eines zu klassifizierenden Lastprofils P durch einen Prozessor (12) beschrieben. Das Verfahren weist folgende Schritte auf:
- Bereitstellen (20), für einen Zugriff durch den Prozessor (12), des zu klassifizierenden Lastprofils P in einem Datenspeicher (14);
- Bereitstellen (22), für einen Zugriff durch den Prozessor (12), einer Datenbasis von J klassifizierten Lastprofilen $P_j$ mit j=1,...,J in dem Datenspeicher (14), wobei den Lastprofilen $P_j$ jeweils ein das Lastprofil $P_j$ klassifizierender Metadatensatz $I_j$ mit ein oder mehreren Metadaten-Elementen $I_{j,q}$ zugeordnet ist;
- Auswählen (24), durch den Prozessor (12), von K klassifizierten Lastprofile $P_k$ aus der besagten Datenbasis und von korrespondierenden Lastprofil-Skalierungsfaktoren $\beta_k$ so, dass der Betrag einer Differenz $\delta$ zwischen dem zu klassifizierenden Lastprofil P und einer Summe der K ausgewählten Lastprofile $P_k$, jeweils multipliziert mit dem korrespondierenden Lastprofil-Skalierungsfaktor $\beta_k$, kleiner als ein vorgegebener Schwellwert S ist:

$$|P - \sum_{k=1}^{K} \beta_k P_k| = \delta < S$$

- Erstellen, durch den Prozessor (12), eines Metadatensatzes I mit ein oder mehreren Metadaten-Elementen $I_q$, die auf den klassifizierenden Metadatensätzen $I_k$ der K ausgewählten Lastprofile $P_k$ basieren;
- Übertragen, durch den Prozessor (12), des erstellten Metadatensatzes I in den Datenspeicher (14); und
- Klassifizieren (26) des zu klassifizierenden Lastprofils P durch Generieren einer Zuordnung des erstellten Metadatensatzes I zu dem zu klassifizierenden Lastprofil P durch den Prozessor (12).

FIG 2

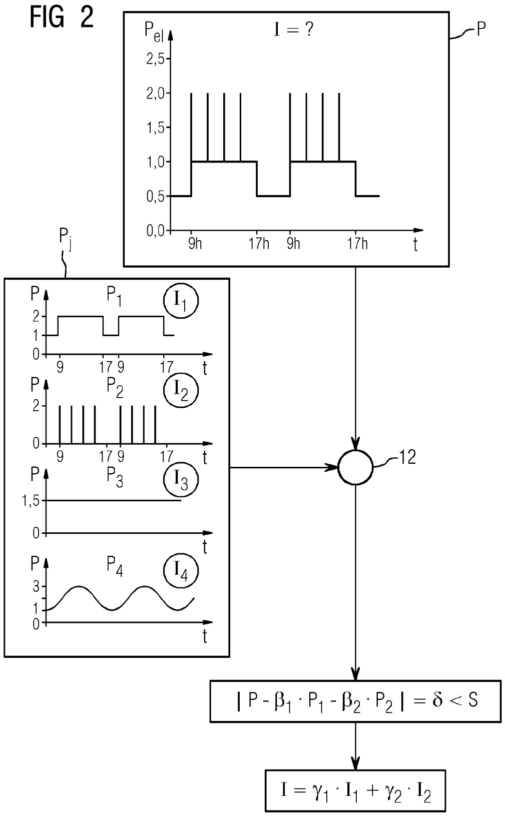


EP 4 290 246 A1

## Beschreibung

Die Erfindung betrifft ein Verfahren gemäß dem Oberbegriff des Patentanspruches 1.

Ein Energiesystem, beispielsweise ein Stadtteil, ein Inselnetz, ein Campus oder ein Industriekomplex, umfasst typischerweise mehrere Energiesubsysteme, beispielsweise Wohngebäude, kommerzielle Gebäude, Industrieanlagen und/oder dezentrale Kraftwerke.

Energiesubsysteme ihrerseits umfassen typischerweise mehrere energietechnische Komponenten, die sich auf eine Gewinnung (Erzeugung), Umwandlung, Lieferung und/oder Nutzung von Energie, insbesondere elektrischer Energie (Strom) und/oder thermischer Energie (Wärme), beziehen. Insbesondere umfassen Energiesubsysteme vermehrt energietechnische Komponenten, die erneuerbare Energien gewinnen, beispielsweise Photovoltaikanlagen und/oder Windkraftanlagen.

Für eine passende Auslegung von energietechnischen Komponenten eines Energiesubsystems, z. B. einen Transformator oder ein Blockheizkraftwerk eines geplanten Gebäudes oder einer geplanten Industrieanlage, ist es wichtig, den zukünftigen Energieverbrauch des Energiesubsystems möglichst genau vorherzusagen. Dabei ist es üblich, eine Prognose eines Lastprofils des Energiesubsystems auf Basis von gemessenen Lastprofilen existierender Energiesubsysteme durchzuführen, welche vergleichbar mit dem geplanten Energiesubsystem sind.

Lastprofil, Lastgang, Lastkurve, Lastganglinie, Lastgangkennlinie oder, je nach Zeitachse, auch Tages- oder Jahresgang bezeichnen in der Elektrizitätswirtschaft bzw. Energieversorgung den zeitlichen Verlauf der von einem Verbraucher abgenommenen Leistung, z. B. der elektrischen Leistung oder der Gas-Leistung, über eine zeitliche Periode (Quelle: https://de.wikipedia.org/; Stand 11. März 2022). Ein Lastprofil wird daher auch als Leistungsprofil bezeichnet.

Je größer die Anzahl von zur Auswahl stehenden Lastprofilen ist, desto höher ist die Wahrscheinlichkeit, dass für ein geplantes Energiesubsystem ein passendes Lastprofil eines vergleichbaren Energiesubsystems identifiziert werden kann, ein sogenanntes Vergleichs-Energiesubsystem. Zwar steht in der Regel eine ausreichende Zahl an gemessenen Lastprofilen zur Verfügung, aber in vielen Fällen sind die Metadaten eines Lastprofils, d. h. die Informationen über das jeweilige Energiesubsystem, nicht ausreichend.

Metadaten eines Lastprofils können z. B. Informationen zu Gebäudegestalt (freistehendes Einzelgebäude, aneinandergebaute Gebäude, Gebäudeensemble), Gebäudenutzung und -funktion (Wohnen, Büro, Gewerbe, Industrie, Kultur, Verkehr, Religion, Gesundheit), Lage (exponierte Lage, Campus, Innenstadt), Baujahr (Wärmedämmstandard, Wärmeschutzverordnung), Renovierungen (Jahr, Umfang), Wärmekapazität (Beton, Ziegel, Holz) und Außen- und Innen-Temperatur während der Messung sein. Dazu treten typische Prosumer-Merkmale wie Photovoltaik-Anlagen, Stromspeicher, etc.

Metadaten eines Lastprofils können aber auch energietechnische Komponenten, d. h. Verbraucher und/oder Erzeuger elektrischer Energie und anderer Energieformen beschreiben, die eine im Lastprofil wiedergegebene Leistung aufnehmen und/oder abgeben. So können z. B. ein Transformator, eine elektrische Heizungsanlage, ein Druckluftkompressor, eine Beleuchtungsanlage und eine Photovoltaik-Anlage, energietechnische Komponenten eines Energiesubsystems sein, die ein bestimmtes elektrisches Lastprofil zeigen. Eine Gasheizungsanlage eines Gebäudes kann ein bestimmtes Lastprofil einer abgenommenen Gas-Leistung zeigen.

Fehlende oder lückenhafte Metadaten können eine Identifikation von geeigneten Vergleichs-Energiesubsystemen schwierig bis unmöglich machen.

Es besteht also Bedarf nach einer Möglichkeit, ein vorliegendes Lastprofil, zu dem keine bzw. lediglich lückenhafte Metadaten vorliegen, zu klassifizieren, d. h. ihm Metadaten zuzuordnen. Das schließt die Identifikation ein, welche energietechnischen Komponenten Bestandteil eines Vergleichs-Energiesubsystems sind, von dem ein gemessenes Lastprofil vorliegt.

Der vorliegenden Erfindung liegt also die Aufgabe zugrunde, ein Verfahren zur Klassifizierung eines Lastprofils bereitzustellen.

Die Aufgabe wird durch ein Verfahren mit den Merkmalen des unabhängigen Patentanspruches 1 gelöst. Das erfindungsgemäße Verfahren dient einer Klassifizierung eines zu klassifizierenden Lastprofils P durch einen Prozessor. Das Verfahren weist einen Schritt auf, in dem das zu klassifizierende Lastprofil P für einen Zugriff durch den Prozessor in einem Datenspeicher bereitgestellt wird. Das Verfahren weist einen weiteren Schritt auf, in dem eine Datenbasis von J klassifizierten Lastprofilen $P_j$, mit j=1,...,J, für einen Zugriff durch den Prozessor in dem Datenspeicher bereitgestellt wird. Dabei ist den Lastprofilen $P_j$ jeweils ein das Lastprofil $P_j$ klassifizierender Metadatensatz $I_j$ mit ein oder mehreren Metadaten-Elementen $I_{j,q}$ zugeordnet. Das Verfahren weist einen weiteren Schritt auf, in dem durch den Prozessor K klassifizierte Lastprofile $P_k$ aus der besagten Datenbasis und korrespondierende Lastprofil-Skalierungsfaktoren $\beta_k$ so ausgewählt werden, dass der Betrag einer Differenz $\delta$ zwischen dem zu klassifizierenden Lastprofil P und einer Summe der K ausgewählten Lastprofile $P_k$, jeweils multipliziert mit dem korrespondierenden Lastprofil-Skalierungsfaktor $\beta_k$, kleiner als ein vorgegebener Schwellwert S ist: $|P - \sum_{k=1}^{K} \beta_k P_k| = \delta < S$. Das Verfahren weist einen weiteren Schritt auf, in dem durch den Prozessor ein Metadatensatz I mit ein oder mehreren Metadaten-Elementen $I_q$, die auf den klassifizierenden Metadatensätzen $I_k$ der K ausgewählten Lastprofile $P_k$ basieren, erstellt wird. Das Verfahren weist einen weiteren Schritt auf, in dem durch den Prozessor der erstellte Metadatensatzes I in den Datenspeicher übertragen wird. Und das Verfahren weist einen weiteren Schritt auf, in dem das zu klassifizierende Lastprofil P durch Generieren einer Zuordnung des erstellten Metadatensatzes I zu dem zu klassifizierenden Lastprofil P durch den Prozessor klassifiziert wird.

Dabei sind die Lastprofil-Skalierungsfaktoren $\beta_k$, nicht auf einen konstanten Wert beschränkt, sondern sie können selbst Funktionen sein; zum Beispiel kann ein Lastprofil-Skalierungsfaktor $\beta_k$ eine Geradenfunktion $f(x)=m \cdot x+t$, eine trigonometrische Funktion wie die Sinusfunktion $f(x)=m \cdot \sin(x)+t$ oder eine beliebige andere Funktion sein.

Die der Erfindung zugrundeliegende Idee ist, in einem "unbekannten" Lastprofil ein oder mehrere Muster zu erkennen, die Ähnlichkeiten zu Mustern in bekannten Lastprofilen aufweisen. In diesem Zusammenhang bedeutet "unbekanntes" Lastprofil, dass von dem Lastprofil keine oder zumindest nicht ausreichend viele Metadaten bekannt sind, welche eine Identifizierung bzw. Interpretation des Lastprofils, z. B. eine Zuordnung zu einem Energiesubsystem, erlauben. Die Metadaten der bekannten Lastprofile, die dem "unbekannten" Lastprofil ähneln, dienen dann als Grundlage für das Generieren von Metadaten für das "unbekannte" Lastprofil, mit denen das "unbekannte" Lastprofil identifiziert bzw. interpretiert werden kann, z. B. für eine Zuordnung zu einem Energiesubsystem.

Ein einem Lastprofil $P_j$ eines Energiesubsystems zugeordneter Metadatensatz $I_j$ umfasst ein oder mehrere Metadatenelemente $I_q$, wobei q = 1, 2, etc.:

$$I = (I_1,\ I_2,\ ...,\ I_q)$$

Ein Metadatenelement $I_q$ enthält einen Metadaten-Wert, der einer das Energiesubsystem beschreibenden Metadaten-Information - auch als Metadaten-Größe bezeichnet - zugeordnet ist; z. B. kann der Metadaten-Wert "86 kWh/(m$^2$a)" der Metadaten-Größe "Energieverbrauchskennwert" zugeordnet sein.

Zum Beispiel kann eine Datenbasis von Lastprofilen, welche mehrere Lastprofile aufweist, so definiert sein, dass jedem Lastprofil der Datenbasis ein Metadatensatz $I_j$ mit q = 3 Metadatenelementen $I_{j,q}$ zugeordnet ist:

$$I_j = (I_{j,1},\ I_{j,2},\ I_{j,3}).$$

Dabei kann, z. B. durch einen Anwender des Verfahrens oder einen Anbieter / Provider / Lieferanten der Datenbasis, festgelegt sein, dass das erste Metadatenelement $I_{j,1}$ eines Metadatensatzes $I_j$ der Datenbasis einen Metadaten-Wert zu der Metadaten-Information [Lage], das zweite Metadatenelement $I_{j,1}$ einen Metadaten-Wert zu der Metadaten-Information [Energieverbrauchskennwert], und das dritte Metadatenelement $I_{j,3}$ einen Metadaten-Wert zu der Metadaten-Information [Innen-Temperatur während der Messung] angibt. Zum Beispiel kann daher ein erster Metadatensatz der Datenbasis

$$I_1 =$$

$$(I_{1,1},\ I_{1,2},\ I_{1,3}) =$$

("Innenstadt" [Lage], "86 kWh/(m$^2$a)" [Energieverbrauchskennwert], "19°C" [Innen-Temperatur während der Messung])

lauten. Bezüglich der Metadaten-Informationen können skalierbare Metadaten-Informationen und Nicht-skalierbare Metadaten-Informationen unterschieden werden:

<u>Skalierbare Metadaten-Information</u>

Eine Metadaten-Information $I_q$ ist skalierbar, falls gilt: Bei zwei Energiesubsystemen ESS1 und ESS2 (mit Lastprofilen $P_1$ bzw. $P_2$), die in Bezug auf eine bestimmte Metadaten-Information $I_q$ unterschiedliche Metadaten-Werte $I_{1,q}$ und $I_{2,q}$ aufweisen, existiert eine Funktion f, die in Abhängigkeit von diesen Metadaten-Werten $I_{1,q}$ und $I_{2,q}$ das Lastprofil $P_1$ des einen Energiesubsystems in das Lastprofil $P_2$ des anderen Energiesubsystems transformiert:

$$P_2 = f(P_1, I_{1,q}, I_{2,q})$$

wobei:

$P_1$ = Lastprofil des einen Energiesubsystems,
$P_2$ = Lastprofil des anderen Energiesubsystems,
$I_{1,q}$ = Metadaten-Wert zur Metadaten-Information $I_q$ von $P_1$,
$I_{2,q}$ = Metadaten-Wert zur Metadaten-Information $I_q$ von $P_2$.

In einer bevorzugten Ausgestaltung ist die Funktion f eine lineare Funktion:

$$P_2 = (c(I_{1,q}, I_{2,q})-k)\cdot P_1 + n$$

wobei:

$c(I_{1,q}, I_{2,q})$ = konstante Funktion der Metadaten-Werte $I_{1,q}$, $I_{2,q}$ k = Parameter,
n = Offset (optional abhängig von Metadaten-Werten $I_{1,q}$, $I_{2,q}$).

Beispiele für skalierbare Metadaten-Informationen sind die Gebäudenutzfläche oder ein spezifischer Energieverbrauch.

Nicht-skalierbare Metadaten-Information

Eine nicht-skalierbare Metadaten-Information ist eine ein Lastprofil klassifizierende Metadaten-Information, für die die obige Definition der skalierbaren Metadaten-Information nicht gilt, die aber trotzdem für eine Beschreibung eines Energiesubsystems geeignet bzw. eine charakteristische Größe ist. Beispiele für nicht-skalierbare Metadaten-Informationen sind das Baujahr oder die Art der Nutzung.

Eine nicht-skalierbare Metadaten-Information, z. B. Gebäudeart, Standort, Art der Nutzung, Baujahr, Renovierung, Gebäudehöhe, kann auf Grundlage einer Zuordnungsvorschrift ZV, die eine Relation zwischen nicht-skalierbaren Metadaten-Informationen und skalierbaren Metadaten-Informationen beschreibt, in eine skalierbare Metadaten-Information transformiert werden. Eine solche Zuordnungsvorschrift kann z. B. Tabellenwerken, DIN-Normen, Wärmeschutzverordnungen abgeleitet werden; beispielsweise existieren Tabellen, gemäß denen einem Gebäude mit einem bestimmten Baujahr ein typischer jährlicher Energieverbrauch in kWh/($m^2$a) (mit Streuung) zugeordnet werden kann.

Die so gewonnenen skalierbaren Metadaten $I_{k,q,s}$ der beiden Lastprofile P1 und P2 werden dem zu klassifizierenden Lastprofil P zugeordnet, indem die skalierbaren Metadaten $I_{k,q,s}$ entsprechend skaliert werden:

$$I_{q,s} = \gamma_1 \cdot I_{1,q,s} + \gamma_2 \cdot I_{2,q,s}$$

In einem nachfolgenden Schritt wird die oben genannte Zuordnungsvorschrift ZV in eine inverse Zuordnungsvorschrift $ZV^{-1}$ invertiert. Mithilfe dieser inversen Zuordnungsvorschrift $ZV^{-1}$ werden den gewonnenen skalierbaren Metadaten $I_{q,s}$ des Metadatensatzes I nicht-skalierbare Metadaten $I_{q,ns}$ zugeordnet, welche die nicht-skalierbaren Metadaten $I_{q,ns}$ des Metadatensatzes I sind:

$$ZV^{-1}: I_{q,s} \rightarrow I_{q,ns}$$

Auf diese Weise können auch die nicht-skalierbaren Metainformationen verwendet werden. Zusätzlich ist es auf diese Weise möglich, die nicht-skalierbaren Metadaten $I_{k,q,ns}$ eines Lastprofils $P_k$ zum Aufbau eines eigenen Nachschlagewerks zu nutzen, welches Informationen enthält, die eine Zuordnung einer nicht-skalierbaren Metainformation zu einer skalierbaren Metainformation ermöglicht. Dabei wächst die Menge der Informationen in dem Nachschlagewerk und somit das Potential für eine Transformation zwischen nicht-skalierbaren Metadaten und skalierbaren Metadaten mit der Anzahl der bearbeiteten Fälle.

Mit dem gleichen Prinzip können auch energietechnische Komponenten in einem Energiesubsystem identifiziert werden. Wenn z. B. in dem zu klassifizierenden Lastprofil das Lastprofil eines Druckluftkompressors enthalten ist, kann das typische Lastprofil eines Druckluftkompressors (zeitlicher Verlauf der von dem Druckluftkompressor abgenommenen elektrischen Leistung) im zu klassifizierenden Lastprofil identifiziert werden.

Das erfindungsgemäße Verfahren und/oder eine oder mehrere Funktionen, Merkmale und/oder Schritte des erfindungsgemäßen Verfahrens und/oder seiner Ausgestaltungen können computergestützt sein.

Vorteilhafte Ausgestaltungen und Weiterbildungen der Erfindung sind in den abhängigen Ansprüchen angegeben. Dabei kann das erfindungsgemäße Verfahren auch entsprechend den abhängigen Vorrichtungsansprüchen weitergebildet sein, und umgekehrt.

Gemäß einer vorteilhaften Ausgestaltung der Erfindung erfolgt die Auswahl der K klassifizierten Lastprofile $P_k$ durch Lösen einer Optimierungsaufgabe durch den Prozessor. Bei dieser Optimierungsaufgabe bildet die Differenz $\delta$ eine zu minimierende Zielfunktion ZF, wobei die J Lastprofile $P_j$ der Datenbasis Variablen der Zielfunktion ZF bilden. Häufig ist eine analytische Lösung eines Optimierungsproblems nicht möglich und es müssen numerische Verfahren eingesetzt werden; hierzu eignet sich ein Prozessor, der einen entsprechenden Lösungsalgorithmus abarbeitet.

Gemäß einer vorteilhaften Ausgestaltung der Erfindung ist die Zielfunktion ZF so definiert, dass außer der Differenz $\delta$ auch die Anzahl K an verwendeten klassifizierten Lastprofilen $P_k$ zu minimieren ist.

Gemäß einer vorteilhaften Ausgestaltung der Erfindung werden die beiden Bestandteile $\delta$, K der Zielfunktion ZF mit Gewichtungsfaktoren w1, w2 nach ihrer Bedeutung belegt und dann zu der Zielfunktion ZF summiert: ZF = min (w1*$\delta$/x + w2*K).

Gemäß einer vorteilhaften Ausgestaltung der Erfindung darf die Anzahl K an verwendeten klassifizierten Lastprofilen $P_k$ einen Maximalwert $K_{max}$ nicht überschreiten.

Gemäß einer vorteilhaften Ausgestaltung der Erfindung wird, um ein skalierbares Metadaten-Element $I_{q,s}$ des Metadatensatzes I des zu klassifizierenden Lastprofils P zu erhalten, eine Summe der skalierbaren Metadaten-Elemente $I_{k,q,s}$ der K ausgewählten Lastprofile $P_k$ gebildet, wobei die skalierbaren Metadaten-Elemente $I_{k,q,s}$ jeweils mit einem Metadaten-Skalierungsfaktor $\gamma_k$ multipliziert werden: : $I_{q,s} = \sum_{k=1}^{K} \gamma_k I_{k,q,s}$ , wobei der Metadaten-Skalierungsfaktor $\gamma_k$ jeweils eine Funktion des korrespondierenden Lastprofil-Skalierungsfaktors $\beta_k$ ist: $\gamma_k = f(\beta_k)$.

Gemäß einer vorteilhaften Ausgestaltung der Erfindung wird, um ein nicht-skalierbares Metadaten-Element $I_{q,ns}$ des Metadatensatzes I des zu klassifizierenden Lastprofils P zu erhalten, in einem ersten Schritt den nicht-skalierbaren Metadaten-Elementen $I_{q,ns}$ der K ausgewählten Lastprofile $P_k$ in einem ersten Schritt mithilfe einer vorgegebenen Zuordnungsvorschrift (ZV) jeweils ein skalierbares Metadaten-Element $I_{k,q,s}$ zugeordnet: ZV: $I_{k,q,ns} \rightarrow I_{k,q,s}$, und in einem zweiten Schritt eine Summe dieser skalierbaren Metadaten-Elemente $I_{k,q,s}$ der K ausgewählten Lastprofile $P_k$ gebildet, wobei die skalierbaren Metadaten-Elemente $I_{k,q,s}$ jeweils mit einem Metadaten-Skalierungsfaktor $\gamma_k$ multipliziert werden, der eine Funktion des korrespondierenden Lastprofil-Skalierungsfaktors $\beta_k$ ist: $I_{q,s} = \sum_{k=1}^{K} \gamma_k I_{k,q,s}$ , und in einem dritten Schritt dem resultierenden skalierbaren Metadaten-Element $I_{q,s}$ mithilfe der inversen Zuordnungsvorschrift ($ZV^{-1}$) ein nicht-skalierbares Metadaten-Element $I_{q,ns}$ zugeordnet, welches ein nicht-skalierbares Metadaten-Element $I_{q,ns}$ des Metadatensatzes I des zu klassifizierenden Lastprofils P ist: $ZV^{-1}$: $I_{q,s} \rightarrow I_{q,ns}$

Gemäß einer vorteilhaften Ausgestaltung der Erfindung weist ein klassifizierender Metadatensatz $I_j$ ein oder mehrere folgender Metadaten $I_{1,q}$, jeweils skalierbar oder nicht-skalierbar, auf:

- Gebäudegrundfläche (skalierbar)
- Gebäudenutzfläche (skalierbar)
- Wärmekapazität (skalierbar)
- Außen-Temperaturen (skalierbar)
- Innen-Temperaturen (skalierbar)
- Gebäudeart (nicht-skalierbar)
- Standort (nicht-skalierbar)
- Art der Nutzung (nicht-skalierbar)
- Baujahr (nicht-skalierbar)
- Renovierung (nicht-skalierbar)
- Gebäudehöhe (nicht-skalierbar)

Gemäß einer vorteilhaften Ausgestaltung der Erfindung wird das zu klassifizierende Lastprofil P in R separate

zu klassifizierende Lastprofilabschnitte $P_r$ unterteilt, mit r=l,...,R und $R \in \mathbb{N} \setminus \{0\}$, und für jeden zu klassifizierenden Lastprofilabschnitt $P_r$ T Lastprofilabschnitte $P_{j,t}$ aus besagter Datenbasis von J klassifizierten Lastprofilen $P_j$ mit derselben zeitlichen Länge wie der Lastprofilabschnitt $P_r$ und von korrespondierenden Lastprofilabschnitts-Skalierungsfaktoren $\beta_t$ so ausgewählt, dass der Betrag einer Differenz $\delta$ zwischen dem zu klassifizierenden Lastprofilabschnitt $P_r$ und einer Summe der T Lastprofilabschnitte $\bar{\boldsymbol{P}}_{j,t}$, jeweils multipliziert mit dem korrespondierenden Lastprofilabschnitts-Skalierungsfaktor $\beta_k$, kleiner als ein vorgegebener Abschnitts-Schwellwert $S_r$ ist:

$$|P_r - \sum_{t=1}^{T} \bar{P}_{j,t}\, \beta_t| = \delta_r < S_r.$$

Gemäß einer vorteilhaften Ausgestaltung der Erfindung werden die zu klassifizierenden Lastprofilabschnitte $P_r$ nach einem oder mehreren folgenden Kriterien gebildet: Tag / Nacht; Arbeitstag / Wochenende; Arbeitstag / arbeitsfreier Tag; Urlaubszeit / keine Urlaubszeit. Die Auswahl kann auch nur für bestimmte Zeitbereiche, z. B. Wochenenden, durchgeführt werden, wobei dann nur die Daten von bestehenden Lastprofilen $P_j$ aus Wochenenden verwendet werden.

Gemäß einer vorteilhaften Ausgestaltung der Erfindung werden ein oder mehr Lastprofile $P_j$ aus der Datenbasis von Lastprofilen $P_j$ jeweils in zwei oder mehr Unterlastprofile zerlegt und die auf diese Weise gewonnenen Unterlastprofile als eigenständige Lastprofile $P_j$ zu der Datenbasis von Lastprofilen $P_j$ hinzugefügt.

Gemäß einer vorteilhaften Ausgestaltung der Erfindung erfolgt auf Basis der klassifizierenden Metadaten-Informationen $I_q$, mit denen das zu klassifizierende Lastprofil P klassifiziert wird, eine Identifikation des Energiesubsystems.

Gemäß einer vorteilhaften Ausgestaltung der Erfindung wird das klassifizierte Lastprofil P für eine Energiesystemanalyse eines Energiesubsystems verwendet.

Gemäß einer vorteilhaften Ausgestaltung der Erfindung weisen das zu klassifizierende Lastprofil P und die J Lastprofile $P_j$ der Datenbasis eine zeitliche Auflösung von $\leq$ 15 min auf.

Gemäß einer vorteilhaften Ausgestaltung der Erfindung können für die Auswahl der K klassifizierten Lastprofile $P_k$ zur Nachbildung des zu klassifizierenden Lastprofils mehrere ähnliche Lösungen existieren. Diese verschiedenen Lösungen können mit Wahrscheinlichkeiten belegt werden.

Gemäß einer vorteilhaften Ausgestaltung der Erfindung werden die existierenden Lastprofile $P_j$ mit einem Clusteralgorithmus in Gruppen mit ähnlichen Eigenschaften eingeteilt, und nur jeweils ein Lastprofil $P_j$ einer Gruppe wird für die Nachbildung des zu klassifizierenden Lastprofils verwendet. Dieses Vorgehen reduziert Rechenzeit bzw. macht das Problem einfacher lösbar.

Die oben beschriebenen Eigenschaften, Merkmale und Vorteile dieser Erfindung sowie die Art und Weise, wie diese erreicht werden, werden klarer und deutlicher verständlich durch die folgende Beschreibung, welche anhand der Zeichnung näher erläutert wird. Es zeigen jeweils schematisch und nicht maßstabsgetreu:

Figur 1 ein Beispiel für eine Synthese eines Lastprofils eines Energiesubsystems aus Lastprofilen mehrerer energietechnischer Komponenten;

Figur 2 ein Beispiel für eine Analyse eines Lastprofils eines Energiesubsystems gemäß einer Ausgestaltung der vorliegenden Erfindung;

Figur 3 eine Vorrichtung zur Ausführung des Verfahrens;

Figur 4 ein Vorgehen bei ungleich besetzten Metadatensätzen;

Figur 5 eine Funktion zur Umrechnung eines MetadatenSkalierungsfaktors $\gamma_k$ aus einem korrespondierenden Lastprofil-Skalierungsfaktor $\beta_k$;

Figur 6 ein Ablaufdiagramm eines Algorithmus zur Durchführung eines erfindungsgemäßen Verfahrens; und

Figur 7 ein Datenübertragungsdiagramm zur Durchführung eines erfindungsgemäßen Verfahrens.

Fig. 1 zeigt ein Beispiel eines elektrischen Lastprofils P1+P2 eines Energiesubsystems, welches sich aus zwei elektrischen Lastprofilen P1 und P2 unterschiedlicher energietechnischen Komponenten, die in dem Energiesubsystem installiert sind, zusammensetzt (Synthese). Bei dem Energiesubsystem kann es sich z. B. um ein gewerblich genutztes Gebäude mit einer Nutzfläche N handeln; daher wird das Energiesubsystem im Folgenden auch als "Gebäude" bezeichnet. Das Lastprofil P1+P2 gibt den zeitlichen Verlauf der abgenommenen elektrischen Leistung des Gebäudes an. Dabei wird das Lastprofil P1+P2 gebildet durch die Summe von einem ersten zeitabhängigen Lastprofil P1, welches den zeitlichen Verlauf der abgenommenen elektrischen Leistung einer Beleuchtungsanlage in dem Gebäude angibt, und einem zweiten zeitabhängigen Lastprofil P2, welches den zeitlichen Verlauf der abgenommenen elektrischen Leistung einer Druckluftanlage in dem Gebäude angibt.

Die Beleuchtungsanlage in dem Gebäude weist eine Grundlast von 1 AU (AU = Arbitrary Unit) auf, die durch durchgehend eingeschaltete Leuchten, z. B. zur Kennzeichnung von Notausgängen, hervorgerufen wird. Jeden Tag während der Arbeitszeit von 9h bis 17h sind die Arbeitsleuchten in dem Gebäude eingeschaltet, wodurch während der Arbeitszeit eine erhöhte Last von 2 AU gemessen wird.

Die Druckluftanlage in dem Gebäude arbeitet zu vier Zeitpunkten während der Arbeitszeit von 9h bis 17h, nämlich um 9h, 11h, 13h und 15h, um einen Druckluftspeicher zu füllen, dessen Druckluftinhalt jeweils für zwei Stunden ausreicht. Zu diesen Zeitpunkten springt die Last jeweils von 0 auf einen Wert von 2 AU, um nach einer relativ kurzen Zeitdauer von weniger als 15 min wieder auf 0 zurückzufallen.

Dieses Lastprofil P1+P2 wird von einem zentralen Stromzähler des Gebäudes, der im Hauptverteiler des Gebäudes den Gesamtstromverbrauch des Gebäudes erfasst, gemessen.

Fig. 2 zeigt ein Beispiel eines Verfahrens, bei dem ein zu klassifizierendes Lastprofil P, welches den zeitlichen Verlauf einer elektrischen Leistung $P_{el}$ angibt, analysiert wird; eine solche Analyse kann als eine Umkehrung der in Fig. 1 beschriebenen Synthese eines Gesamtlastprofils eines Energiesubsystems aus den Lastprofilen mehrerer verschiedener energietechnischer Komponenten in dem Energiesubsystem betrachtet werden. Das Attribut "zu klassifizierendes" bedeutet, dass zu dem Lastprofil P entweder kein oder nur ein für eine Klassifikation nicht ausreichender Metadatensatz I vorliegt; das wird im Lastprofil P in Fig. 2 symbolisiert durch "I=?".

Die Analyse erfolgt auf Grundlage einer Datenbasis von klassifizierten Lastprofilen, die in diesem Beispiel aus J = 4 unterschiedlichen gegebenen Lastprofilen Pj = P1, ..., P4 besteht, denen jeweils ein klassifizierender Metadatensatz $I_j$ mit ein oder mehreren Metadaten $I_{i,q}$ zugeordnet ist. Das Lastprofil P1 in der Datenbasis Pj entspricht dem Lastprofil P1 in Fig. 1. Das Lastprofil P2 in der Datenbasis Pj entspricht dem Lastprofil P2 in Fig. 1. Das Lastprofil P3 in der Datenbasis Pj zeigt einen konstanten Verbrauch von 1,5 AU (AU = Arbitrary Unit). Das Lastprofil P4 in der Datenbasis Pj zeigt einen sinusförmigen Verbrauch mit einem Minimum von von 1 AU und einem Maximum von 3 AU. In der Datenbasis Pj werden ein oder mehrere Lastprofile gesucht, die, entweder allein oder in Summe, dem zu klassifizierenden Lastprofil P ähnlich sind.

Durch eine mathematische Methode, z. B. eine numerische Berechnung eines Optimierungsproblems, die von einem Prozessor 12 durchgeführt wird, ergibt sich, dass die Summe der beiden Lastprofile P1 und P2, multipliziert mit einem jeweiligen Skalierungsfaktor β1=0,5 bzw. β2=0,5, dem zu klassifizierenden Lastprofil x(t) so stark ähnelt, dass gilt:

$$P = \beta 1\ P1 + \beta 2\ P2 + \delta,$$

wobei der Betrag der Differenz δ kleiner als ein vorgegebener Schwellwert S ist: $\delta < S$.

Das zu klassifizierende Lastprofil P wird dadurch klassifiziert, dass ihm die klassifizierenden Metadatensätze $I_k$ der beiden Lastprofile P1 und P2 zugeordnet werden:

$$I \rightarrow (I_{1,q},\ I_{2,q})$$

Dabei muss unterschieden werden, ob es sich um skalierbare Metadaten $I_{k,q,s}$ oder nicht skalierbare Metadaten $I_{k,q,ns}$ eines Lastprofils handelt.

Skalierbare Metadaten $I_{k,q,s}$ eines Lastprofils $P_k$ sind z. B.

- Gebäudegrundfläche (skalierbar)
- Gebäudenutzfläche (skalierbar)
- Wärmekapazität (skalierbar)
- Außen-Temperaturen (skalierbar)

- Innen-Temperaturen (skalierbar).

Die skalierbaren Metadaten $I_{k,q,s}$ der beiden Lastprofile P1 und P2 werden dem zu klassifizierenden Lastprofil P zugeordnet, indem die skalierbaren Metadaten $I_{k,q,s}$ entsprechend skaliert werden:

$$I_{q,s} = (\beta 1\ I_{1,q,s} + \beta 2\ I_{2,q,s})/K$$

Beispiel:

Gegeben sind zwei skalierbaren Metadaten $I_{k,q,s}$:

Gebäudegrundfläche $I_{1,q,s}$ = N
Gebäudegrundfläche $I_{2,q,s}$ = N

Die in der Optimierungsaufgabe gefundenen Skalierungsfaktoren $\beta_k$ betragen:

Skalierungsfaktor $\beta_1$ = 0,5
Skalierungsfaktor $\beta_2$ = 0,5

Diese Skalierungsfaktoren $\beta_k$ müssen noch durch einen Normierungsfaktor 1/K multipliziert werden; der Normierungsfaktor 1/K wird spezifisch für den jeweiligen Fall durch analytische und/oder numerische Methoden ermittelt: K = Anzahl der verwendeten Lastprofile = 2

Durch Einsetzen in die Formel

$$I_{q,s} = (\beta_1\ I_{1,q,s} + \beta_2\ I_{2,q,s})/K$$

ergibt sich somit als skalierbares Metadaten-Element $I_{q,s}$ des Metadatensatzes I des zu klassifizierenden Lastprofils P:

$$\Rightarrow I_{q,s} = (0{,}5\ N + 0{,}5\ N)/2 = N/2$$

Den nicht-skalierbaren Metadaten $I_{k,q,ns}$ eines Lastprofils $P_k$ wie

- Gebäudeart (nicht skalierbar)
- Standort (nicht skalierbar)
- Art der Nutzung (nicht skalierbar)
- Baujahr (nicht skalierbar)
- Renovierung (nicht skalierbar)
- Gebäudehöhe (nicht skalierbar)

werden mithilfe einer Zuordnungsvorschrift ZV, welche aus Quellen wie z. B. Tabellenwerke, DIN-Normen, Wärmeschutzverordnungen abgeleitet wird, skalierbaren Metadaten $I_{k,q,s}$ zugeordnet: ZV: $I_{k,q,ns}$ -> $I_{k,q,s}$. Beispielsweise gibt es Tabellen, gemäß denen einem Gebäude mit einem bestimmten Baujahr ein typischer jährlicher Energieverbrauch in $kWh/m^2$/Jahr (mit Streuung) zugeordnet werden kann.

Die so gewonnenen skalierbaren Metadaten $I_{k,q,s}$ der beiden Lastprofile P1 und P2 werden dem zu klassifizierenden Lastprofil P zugeordnet, indem die skalierbaren Metadaten $I_{k,q,s}$ entsprechend skaliert werden:

$$I_{q,s} = \gamma 1\ I_{1,q,s} + \gamma 2\ I_{2,q,s}$$

Dabei sind die Metadaten-Skalierungsfaktoren $\gamma_k$ eine Funktion des korrespondierenden Lastprofil-Skalierungsfaktors $\beta_k$.

Nachfolgend werden den resultierenden skalierbaren Metadaten $I_{q,s}$ des Metadatensatzes I mithilfe der inversen Zuordnungsvorschrift ($ZV^{-1}$) nicht-skalierbare Metadaten $I_{q,ns}$ zugeordnet werden, welche die nicht-skalierbaren Metadaten $I_{q,ns}$ des Metadatensatzes I sind:

$$ZV^{-1}:\ I_{q,s} \rightarrow I_{q,ns}$$

Auf diese Weise können auch diese Metainformationen verwendet werden. Zusätzlich ist es auf diese Weise möglich, die nicht-skalierbaren Metadaten $I_{k,q,ns}$ eines Lastprofils $P_k$ zum Aufbau eines eigenen Nachschlagewerks zu nutzen, mit mehr und mehr Daten.

Beispiel:

Gegeben sind zwei nicht-skalierbaren Metadaten:

$I_{1,q,ns}$ = Baujahr 1968
$I_{2,q,ns}$ = Baujahr 1975
Nun wird mithilfe der Zuordnungsvorschrift ZV: Baujahr -> Energieverbrauchskennwert, welche einem Baujahr einen Energieverbrauchskennwert zuordnet, den beiden nicht-skalierbaren Metadaten jeweils ein Energieverbrauchskennwert zugeordnet:
ZV: Baujahr 1968 -> Energieverbrauchskennwert 400 $kWh/m^2/a$
ZV: Baujahr 1975 -> Energieverbrauchskennwert 300 $kWh/m^2/a$

Die auf diese Weise gewonnenen skalierbaren Metadaten

$I_{1,q,s}$ = 400 $kWh/m^2/a$
$I_{2,q,s}$ = 300 $kWh/m^2/a$

werden summiert, wobei die skalierbaren Metadaten-Elemente $I_{k,q,s}$ jeweils mit einem Metadaten-Skalierungsfaktor $\gamma_k$ multipliziert werden:

$$I_{q,s} = \gamma 1\ I_{1,q,s} + \gamma 2\ I_{2,q,s}$$

Die Skalierungsfaktoren $\gamma_k$ werden spezifisch für den jeweiligen Fall durch analytische und/oder numerische Methoden ermittelt:

Skalierungsfaktor $\gamma 1$ = 0,8/(0,8+0,5)
Skalierungsfaktor $\gamma 2$ = 0,5/(0,8+0,5)

Diese Summe ergibt ein skalierbares Metadaten-Element $I_{q,s}$ des Metadatensatzes I des zu klassifizierenden Lastprofils P:

$$I_{q,s} = \gamma 1\ I_{1,q,s} + \gamma 2\ I_{2,q,s} = (0{,}8 \times 400\ kWh/m^2/a + 0{,}5 \times 300\ kWh/m^2/a)/(0{,}8+0{,}5) = 361\ kWh/m^2/a$$

Mithilfe einer inversen Zuordnungsvorschrift $ZV^{-1}$: Energieverbrauchskennwert -> Baujahr, welche einem Energieverbrauchskennwert ein Baujahr zuordnet, wird dem berechneten Energieverbrauchskennwert 361 $kWh/m^2/a$ das Baujahr 1970 zugeordnet:
$ZV^{-1}$: Energieverbrauchskennwert 361 $kWh/m^2/a$ -> Baujahr 1970 Als Ergebnis erhält man somit als nicht-skalierbares Metadaten-Element $I_{q,ns}$ des Metadatensatzes das Baujahr 1970: $I_{q,ns}$ = 1970.

Fig. 3 zeigt eine Vorrichtung 10 zur Ausführung des Verfahrens. Die Vorrichtung 10 weist einen Prozessor 12, einen Datenspeicher 14 und eine Kommunikationsschnittstelle 16 auf, die miteinander durch interne Datenleitungen 15 zum Austausch von Daten verbunden sind. Dabei kann die Vorrichtung als eine auf einer Leiterplatte (engl.: PCB = Printed Circuit Board) angeordnete elektronische Schaltung ausgebildet sein, bei der der Prozessor 12, der Datenspeicher 14 und die Kommunikationsschnittstelle 16 als elektronische Bauteile (z. B. Halbleiter-Chips) ausgebildet sind und miteinander durch auf und/oder in der Leiterplatte angeordnete Leiterbahnen 15 Daten austauschen können. Ein zu klassifizierendes Lastprofil P wird von einer anfragenden Einheit 30, z. B. von einem PC eines Anwenders, über eine externe Datenleitung 18, welche eine Datenkommunikation zwischen der anfragenden Einheit 30 und der Vorrichtung 10 ermöglicht, an die Kommunikationsschnittstelle 16 gesendet. Die Kommunikationsschnittstelle 16 leitet das zu klassifizierende Lastprofil an den Datenspeicher 14 weiter, wo es abgespeichert wird. Der Prozessor 12 kann über die interne Datenleitung 15 auf den Datenspeicher 14 zugreifen, in dem, außer dem zu klassifizierenden Lastprofil, eine Datenbasis von gegebenen Lastprofilen gespeichert ist, denen jeweils ein klassifizierender Metadatensatz mit ein oder mehreren Metadaten zugeordnet ist. Der Prozessor 12 sucht in den gegebenen Lastprofilen der Datenbasis ein oder mehrere Lastprofile $P_k$, die, entweder allein oder in Summe, dem zu klassifizierenden Lastprofil P ähnlich sind.

Mithilfe von mathematischen Methoden, die von dem Prozessor 12 gemäß einem Analyse-Algorithmus, der in Form eines in dem Datenspeicher 14 abgespeicherten Computerprogramms vorliegt, durchgeführt werden, wählt der Prozessor 12 ein oder mehrere passende Lastprofile $P_k$ aus. Dabei dienen die Werte der ausgewählten ein oder mehreren Lastprofile $P_k$ als Argument einer Funktion f, deren resultierende Funktionswerte, innerhalb vorgegebener Toleranzgrenzen, die Werte des zu klassifizierenden Lastprofils P bilden.

Zum Beispiel wählt der Prozessor 12 ein oder mehrere Lastprofile $P_k$, welche, gegebenenfalls multipliziert mit einem jeweiligen Skalierungsfaktor $\beta_k$, dem zu klassifizierenden Lastprofil P ausreichend stark ähneln. Die Ähnlichkeit wird mithilfe eines vorgegebenen Schwellwerts S geprüft, welcher ebenfalls in dem Datenspeicher 14 abgespeichert ist.

Die Ähnlichkeit zwischen dem zu klassifizierenden Lastprofil P und den gewählten ein oder mehreren Lastprofilen $P_k$ manifestiert sich in Skalierungsfaktoren $\beta_k$, für die gilt: $|P - \sum_{k=1}^{K} \beta_k P_k| = \delta < S$. Dabei ist der Betrag der Differenz $\delta$ zwischen dem zu klassifizierenden Lastprofil P und der Summe der K ausgewählten Lastprofile $P_k$, jeweils multipliziert mit dem korrespondierenden Lastprofil-Skalierungsfaktor $\beta_k$, kleiner als der vorgegebener Schwellwert S.

Eine mögliche mathematische Methode, die von dem Prozessor 12 zur Auswahl der ein oder mehreren Lastprofile $P_k$ durchgeführt wird, kann als ein Optimierungsproblem einer Zielfunktion formuliert werden:

- Zielfunktion: Minimierung des Betrags der Differenz $\delta$, und optional gleichzeitige Minimierung der Anzahl K an verwendeten existierenden Lastprofilen $P_k$.
- Die beiden zu minimierenden Variablen $\delta$, K der Zielfunktion können mit Gewichtungsfaktoren w1, w2 nach ihrer Bedeutung belegt und dann zu einer Zielfunktion ZF summiert werden: $ZF = \min (w1 \cdot \delta / x(t) + w2 \cdot K)$.
- Alternativ kann auch eine maximale Anzahl an verwendeten existierenden Lastprofilen $P_k(t)$ gefordert werden: $K < K_{max}$.

Als Optimierungsvariablen stehen die Auswahl aus der Datenbasis von J Lastprofilen $P_j$ zur Verfügung (q = Faktor vor jedem Lastprofil $P_j$, der jeweils entweder 0 oder 1 ist).

Die Metadaten der in der Analyse gefundenen ein oder mehrere Lastprofile werden von dem Prozessor 12 in den Metadatensatz I des zu klassifizierendes Lastprofils P geschrieben, welches dadurch klassifiziert wird. Das klassifizierte Lastprofil P bzw. der entsprechende Metadatensatz I wird vom Prozessor 12 an die Kommunikationsschnittstelle 16 gesendet, von wo diese Daten über die externe Datenleitung 18 an die anfragende Einheit gesendet werden können.

Es ist auch möglich, dass der Prozessor 12 das klassifizierte Lastprofil P, zusammen mit dem entsprechenden Metadatensatz I, in dem Datenspeicher 14 in der Datenbasis von gegebenen Lastprofilen ablegt, wo das Lastprofil P für zukünftige Anfragen, die eine Klassifizierung eines gegebenen Lastprofils anfordern, als Datenbasis zur Verfügung steht.

Figur 4 zeigt ein mögliches Verfahren bei ungleich besetzten Metadatensätzen. Mit dem erfindungsgemäßen Verfahren ergibt sich, dass das zu klassifizierende Lastprofil P durch die Summe von zwei Lastprofile $P_k$ nachgebildet wird:

$$P = \beta 1\ P1 + \beta 2\ P2$$

Das zu klassifizierende Lastprofil P wird entsprechend durch einen Metadatensatz $I = (I_1, ..., I_q)$ klassifiziert, der als eine Funktion der klassifizierenden Metadatensätze $I_1 = (I_{1,1}, ..., I_{1,q})$ und $I_2 = (I_{2,1}, ..., I_{2,q})$ der zwei Lastprofile

$P_1$ bzw. $P_2$ berechnet wurde.

Nun sind, wie in Fig. 4 dargestellt, in den klassifizierenden Metadatensätzen $I_1 = (I_{1,1}, ..., I_{1,q})$ und $I_2 = (I_{2,1}, ..., I_{2,q})$ der zwei Lastprofile $P_1$ bzw. $P_2$, die im weiteren als ursprüngliche Metadatensätze $I_{1,orig}$ und $I_{2,orig}$ bezeichnet werden, unterschiedliche Metadatenelementen $I_q$ besetzt, d. h. der erste Metadatensatz $I_{1,orig}$ weist Metadaten-Informationen auf, die sich von den Metadaten-Informationen des zweiten Metadatensatzes $I_{2,orig}$ unterscheiden. Zum Beispiel enthält der erste Metadatensatz $I_{1,orig}$ einen Metadaten-Wert $I_{1,3,s}$ zu der Metadaten-Information "Gebäudegrundfläche", aber nicht zu der Metadaten-Information "Wärmekapazität". Demgegenüber enthält der zweite Metadatensatz $I_{2,orig}$ einen Metadaten-Wert $I_{2,1,s}$ zu der Metadaten-Information "Wärmekapazität", nicht aber zu der Metadaten-Information "Gebäudegrundfläche".

Aufgrund der unterschiedlichen Besetzung der Metadatenelemente $I_q$ in diesem ursprünglichen Zustand der klassifizierenden Metadatensätze $I_{1,orig}$ und $I_{2,orig}$ ist es daher nicht möglich, die Metadatensätze $I_{1,orig}$ und $I_{2,orig}$ mit einer korrekten Skalierung zu einem Metadatensatz I des zu klassifizierenden Lastprofils P zusammenzuführen. Daher wird das in dem ersten Metadatensatz $I_{1,orig}$ unbesetzte Metadatenelement $I_q$ zu der Metadaten-Information "Wärmekapazität" ergänzt, indem es durch eine Zuordnungsvorschrift ZV aus dem in dem ersten Metadatensatz $I_{1,orig}$ enthaltenen Metadaten-Wert zu der Metadaten-Information "Gebäudegrundfläche" abgeleitet wird. Und analog wird das in dem zweiten Metadatensatz $I_{2,orig}$ unbesetzte Metadatenelement $I_q$ zu der Metadaten-Information "Gebäudegrundfläche" ergänzt, indem sie durch eine Zuordnungsvorschrift ZV aus dem in dem zweiten Metadatensatz $I_{2,orig}$ enthaltenen Metadaten-Wert zu der Metadaten-Information "Wärmekapazität" abgeleitet wird.

Die Zuordnungsvorschrift ZV kann aus Quellen wie z. B. Tabellenwerke, DIN-Normen, Wärmeschutzverordnungen abgeleitet werden. Beispielsweise gibt es Tabellen, gemäß denen einem Gebäude mit einer bestimmten Gebäudegrundfläche eine typische Wärmekapazität zugeordnet werden kann. Bauphysikalisch gesehen existiert dieser Zusammenhang, weil das Verhältnis von Außenhülle zu Volumen (A/V-Verhältnis; Extreme: Iglu und Wolkenkratzer), also von Wärmeübertragender Umfassungsfläche zu Wärmespeicherndem Volumen (vgl. Größenabhängigkeit des gewichtsspezifischen Energieumsatzes, Extreme: Spitzmaus und Elefant), eine wichtige Kenngröße für die Kompaktheit eines Gebäudes ist. Das A/V-Verhältnis beeinflusst entscheidend den Heizenergiebedarf. Ähnlich verhält es sich mit dem Verhältnis von Gebäudegrundfläche zu Wärmekapazität.

Durch die Zuordnungsvorschrift können also die ergänzten Metadatensätze $I_{1,add}$ aufweisend die Metadatenelemente $I_{1,1,s}$ und $I_{1,3,s}$, und $I_{2,add}$, aufweisend die Metadatenelemente $I_{2,1,s}$ und $I_{2,3,s}$, gewonnen werden. Da diese beiden ergänzten Metadatensätze $I_{1,add}$ und $I_{2,add}$ nun gleich besetzt sind, können sie auch "addiert" werden und somit der Metadatensatz $I = (I_1, ..., I_q)$ des zu klassifizierenden Lastprofils P gebildet werden.

Fig. 5 veranschaulicht an einem Beispiel die Ausgestaltung der Erfindung, dass der Metadaten-Skalierungsfaktor $\gamma_k$ eine Funktion des korrespondierenden Lastprofil-Skalierungsfaktors $\beta_k$ ist: $\gamma_k = f(\beta_k)$.

Durch Lösen einer Optimierungsaufgabe hat der Prozessor z. B. gefunden, dass sich das zu klassifizierende Lastprofil P ergibt, wenn ein erstes Lastprofil $P_1$ in der Datenbasis mit einem Lastprofil-Skalierungsfaktor $\beta_1 = 1/10$ multipliziert wird: $P = 1/10\ P_1$. Dabei weist das erste Lastprofil $P_1$ einen das erste Lastprofil $P_1$ charakterisierenden Metadatensatz $I_1$ mit einem Metadaten-Element $I_{1,1}$ auf, welches die mittlere Außentemperatur $T_a$ bei der Messung des ersten Lastprofils $P_1$ mit $T_a = 0°C$ angibt.

Um aus diesem Metadaten-Element $I_{1,1}$ des ersten Lastprofils $P_1$ das korrespondierende Metadaten-Element $I_1$ des zu klassifizierenden Lastprofils P zu gewinnen, wird die in Fig. 5 dargestellt Funktion verwendet. Dabei ist über einer mittleren Außentemperatur $T_a$ ein Heizenergieverbrauch aufgetragen. Gemäß dem ersten Lastprofil $P_1$ ordnet die Funktion 50 einem Heizenergieverbrauch P1=10 eine mittlere Außentemperatur Ta von 0°C zu. Folglich ist gemäß der Funktion 50 dem oben erwähnten zu klassifizierenden Lastprofil P, der einen Heizenergieverbrauch $P = 1/10\ P_1 = 1$ aufweist, eine mittlere Außentemperatur $T_a$ von 13,5 °C zuzuordnen. Der in Fig. 5 dargestellte Graph gibt also die Funktion wieder, mit der der Metadaten-Skalierungsfaktor $\gamma_k$ als Funktion des korrespondierenden Lastprofil-Skalierungsfaktors $\beta_k$ berechnet werden kann: $\gamma_k = f(\beta_k)$.

Figur 6 zeigt einen möglichen Verfahrensablauf zur Klassifizierung eines zu klassifizierenden Lastprofils P durch einen Prozessor, wobei der Verfahrensablauf der z. B. in Form eines Algorithmus realisiert sein kann.

In einem ersten Schritt 61 erfolgt ein Bereitstellen, für einen Zugriff durch den Prozessor, des zu klassifizierenden Lastprofils P in einem Datenspeicher. In einem nachfolgenden zweiten Schritt erfolgt ein Bereitstellen, für einen Zugriff durch den Prozessor, einer Datenbasis von J klassifizierten Lastprofilen $P_j$ mit $j = 1, ..., J$ in dem Datenspeicher, wobei den Lastprofilen $P_j$ jeweils ein das Lastprofil $P_j$ klassifizierender Metadatensatz $I_j$ mit ein oder mehreren Metadaten-Elementen $I_{j,q}$ zugeordnet ist.

In einem nachfolgenden dritten Schritt erfolgt ein Auswählen, durch den Prozessor, von K klassifizierten Lastprofile $P_k$ aus der besagten Datenbasis und von korrespondierenden Lastprofil-Skalierungsfaktoren $\beta_k$ so, dass der Betrag einer Differenz $\delta$ zwischen dem zu klassifizierenden Lastprofil P und einer Summe der K ausgewählten Lastprofile $P_k$, jeweils multipliziert mit dem korrespondierenden Lastprofil-Skalierungsfaktor $\beta_k$, kleiner als ein vorgegebener Schwellwert S ist: $|P - \sum_{k=1}^{K} \beta_k P_k| = \delta < S$.

In einem nachfolgenden vierten Schritt erfolgt ein Erstellen, durch den Prozessor, eines Metadatensatzes I mit ein oder mehreren Metadaten-Elementen $I_q$, die auf den klassifizierenden Metadatensätzen $I_k$ der K ausgewählten Lastprofile $P_k$ basieren. In einem nachfolgenden fünften Schritt erfolgt ein Übertragen, durch den Prozessor, des erstellten Metadatensatzes I in den Datenspeicher. In einem nachfolgenden sechsten Schritt erfolgt ein Klassifizieren des zu klassifizierenden Lastprofils P durch Generieren einer Zuordnung des erstellten Metadatensatzes I zu dem zu klassifizierenden Lastprofil P durch den Prozessor.

Fig. 7 erläutert eine Ausgestaltung der Erfindung anhand eines Diagramms, in dem ein Austausch von Daten zwischen verschiedenen elektronischen Einheiten veranschaulicht wird. Die elektronischen Einheiten umfassen eine anfragende Einheit 30, welche z. B. ein PC eines Anwenders sein kann. Die elektronischen Einheiten umfassen außerdem eine Vorrichtung 10, z. B. in Form eines Elektronikmoduls, welche einen Prozessor, einen Datenspeicher 14 und ein Kommunikationsinterface 16 aufweist; dabei sind der Prozessor, der Datenspeicher 14 und das Kommunikationsinterface 16 durch interne Datenleitungen 15 miteinander verbunden. Außerdem sind die anfragende Einheit 30 und die Vorrichtung 10 durch eine externe Datenleitung 18 miteinander verbunden.

Zunächst sendet 31 die anfragende Einheit 30 ein zu klassifizierendes Lastprofil 32 an die Vorrichtung 10, wo sie von dem Kommunikationsinterface 16 zu dem Datenspeicher 14 weitergeleitet wird, wo sie abgespeichert wird.

Nachfolgend sendet 33 die anfragende Einheit 30 eine Datenbasis von J klassifizierten Lastprofilen $P_j$ an die Vorrichtung 10, wo sie von dem Kommunikationsinterface 16 zu dem Datenspeicher 14 weitergeleitet wird, wo sie abgespeichert wird.

Nachfolgend greift 35 der Prozessor 12 auf den Datenspeicher 14 zu, um einen Algorithmus zur Ausführung des erfindungsgemäßen Verfahrens, welches in Form eines Computerprogramms in dem Datenspeicher 14 gespeichert ist, in seinen Arbeitsspeicher zu laden. Für die Ausführung des Algorithmus werden, gegebenenfalls in mehreren Schritten 36, Daten 37 vom Datenspeicher 14 zu dem Prozessor übertragen; diese Daten 37 können das zu klassifizierende Lastprofil 32 sowie klassifizierte Lastprofile $P_j$ umfassen.

Nachdem der Prozessor K klassifizierte Lastprofile $P_k$ aus der besagten Datenbasis und korrespondierende Lastprofil-Skalierungsfaktoren $\beta_k$ ausgewählt hat, erstellt er einen Metadatensatzes I mit ein oder mehreren Metadaten-Elementen $I_q$, die auf den klassifizierenden Metadatensätzen $I_k$ der K ausgewählten Lastprofile $P_k$ basieren.

In einem nachfolgenden Schritt 38 sendet der Prozessor 12 den erstellten Metadatensatz 39 an den Datenspeicher 14. In einem nachfolgenden Schritt 40 sendet der Prozessor 12 eine Zuordnungsdatei 41 an den Datenspeicher 14, wobei die Zuordnungsdatei eine dauerhafte Verbindung zwischen dem nunmehr klassifizierten Lastprofil P und dem erstellten Metadatensatz I herstellt. Dabei kann die Zuordnungsdatei 41 an das nunmehr klassifizierte Lastprofil P angehängt werden, so dass ein Nutzer bei Aufruf des Lastprofils P auch einen Verweis auf bzw. eine Weiterleitung auf den korrespondierenden Metadatensatz I erhält ("Link-Funktion").

In einem nachfolgenden Schritt 42 werden die zu dem Lastprofil 32 erstellte Metadatensatz I und die Zuordnungsdatei 41 von dem Datenspeicher 14 an die die anfragende Einheit 30 gesendet. Alternativ ist auch möglich, dass die an die anfragende Einheit 30 gesendete Datei lediglich eine Nachricht enthält, welche einem Nutzer der anfragenden Einheit 30 signalisiert, dass die Klassifikation des Lastprofils P erfolgreich beendet wurde und das klassifizierte Lastprofil P von dem Datenspeicher 14 abrufbar ist.

## Patentansprüche

1. Verfahren zur Klassifizierung eines zu klassifizierenden Lastprofils P durch einen Prozessor (12), mit folgenden Schritten:

   - Bereitstellen (20), für einen Zugriff durch den Prozessor (12), des zu klassifizierenden Lastprofils P in einem Datenspeicher (14);
   - Bereitstellen (22), für einen Zugriff durch den Prozessor (12), einer Datenbasis von J klassifizierten Lastprofilen $P_j$ mit j=1,...,J in dem Datenspeicher (14), wobei den Lastprofilen $P_j$ jeweils ein das Lastprofil $P_j$ klassifizierender Metadatensatz $I_j$ mit ein oder mehreren Metadaten-Elementen $I_{j,q}$ zugeordnet ist;
   - Auswählen (24), durch den Prozessor (12), von K klassifizierten Lastprofile $P_k$ aus der besagten Datenbasis und von korrespondierenden Lastprofil-Skalierungsfaktoren $\beta_k$ so, dass der Betrag einer Differenz $\delta$ zwischen dem zu klassifizierenden Lastprofil P und einer Summe der K ausgewählten Lastprofile $P_k$, jeweils multipliziert mit dem korrespondierenden Lastprofil-Skalierungsfaktor $\beta_k$, kleiner als ein vorgegebener Schwellwert S ist:

$$|P - \sum_{k=1}^{K} \beta_k P_k| = \delta < S$$

- Erstellen, durch den Prozessor (12), eines Metadatensatzes I mit ein oder mehreren Metadaten-Elementen $I_q$, die auf den klassifizierenden Metadatensätzen $I_k$ der K ausgewählten Lastprofile $P_k$ basieren;
- Übertragen, durch den Prozessor (12), des erstellten Metadatensatzes I in den Datenspeicher (14); und
- Klassifizieren (26) des zu klassifizierenden Lastprofils P durch Generieren einer Zuordnung des erstellten Metadatensatzes I zu dem zu klassifizierenden Lastprofil P durch den Prozessor (12).

**2.** Verfahren nach Anspruch 1,
wobei die Auswahl (22) der K klassifizierten Lastprofile $P_k$ durch Lösen einer Optimierungsaufgabe durch den Prozessor (12) erfolgt, bei der die Differenz $\delta$ eine zu minimierende Zielfunktion ZF und die J Lastprofile $P_j$ der Datenbasis Variablen der Zielfunktion ZF bilden.

**3.** Verfahren nach Anspruch 2,
wobei die Zielfunktion ZF so definiert ist, dass außer der Differenz $\delta$ auch die Anzahl K an verwendeten klassifizierten Lastprofilen $P_k$ zu minimieren ist.

**4.** Verfahren nach Anspruch 3,
wobei die beiden Bestandteile $\delta$, K der Zielfunktion ZF mit Gewichtungsfaktoren w1, w2 nach ihrer Bedeutung belegt werden und dann zu der Zielfunktion ZF summiert werden:

$$ZF = \min\ (w1*\delta/x + w2*K)$$

**5.** Verfahren nach einem der vorhergehenden Ansprüche,
wobei die Anzahl K an verwendeten klassifizierten Lastprofilen $P_k$ einen Maximalwert $K_{max}$ nicht überschreiten darf.

**6.** Verfahren nach einem der vorhergehenden Ansprüche,
wobei, um ein skalierbares Metadaten-Element $I_{q,s}$ des Metadatensatzes I des zu klassifizierenden Lastprofils P zu erhalten, eine Summe der skalierbaren Metadaten-Elemente $I_{k,q,s}$ der K ausgewählten Lastprofile $P_k$ gebildet wird, wobei die skalierbaren Metadaten-Elemente $I_{k,q,s}$ jeweils mit einem Metadaten-Skalierungsfaktor $\gamma_k$ multipliziert werden, der eine Funktion des korrespondierenden Lastprofil-Skalierungsfaktors $\beta_k$ ist:

$$I_{q,s} = \sum_{k=1}^{K} \gamma_k I_{k,q,s}$$

**7.** Verfahren nach einem der vorhergehenden Ansprüche,
wobei, um ein nicht-skalierbares Metadaten-Element $I_{q,ns}$ des Metadatensatzes I des zu klassifizierenden Lastprofils P zu erhalten, den nicht-skalierbaren Metadaten-Elementen $I_{q,ns}$ der K ausgewählten Lastprofile $P_k$ in einem ersten Schritt mithilfe einer vorgegebenen Zuordnungsvorschrift (ZV) jeweils ein skalierbares Metadaten-Element $I_{k,q,s}$ zugeordnet wird:

$$ZV:\ I_{k,q,ns} \rightarrow I_{k,q,s}$$

und in einem zweiten Schritt eine Summe dieser skalierbaren Metadaten-Elemente $I_{k,q,s}$ der K ausgewählten Lastprofile $P_k$ gebildet wird, wobei die skalierbaren Metadaten-Elemente $I_{k,q,s}$ jeweils mit einem Metadaten-Skalierungsfaktor $\gamma_k$ multipliziert werden, der eine Funktion des korrespondierenden Lastprofil-Skalierungsfaktors $\beta_k$ ist:

$$I_{q,s} = \sum_{k=1}^{K} \gamma_k I_{k,q,s}$$

und in einem dritten Schritt dem resultierenden skalierbaren Metadaten-Element $I_{q,s}$ mithilfe der inversen Zuord-

nungsvorschrift ($ZV^{-1}$) ein nicht-skalierbares Metadaten-Element $I_{q,ns}$ zugeordnet wird, welches ein nicht-skalierbares Metadaten-Element $I_{q,ns}$ des Metadatensatzes I des zu klassifizierenden Lastprofils P ist:

$$ZV^{-1}: I_{q,s} \rightarrow I_{q,ns}$$

**8.** Verfahren nach einem der vorhergehenden Ansprüche, wobei ein klassifizierender Metadatensatz $I_j$ ein oder mehrere folgender Metadaten $I_{1,q}$, jeweils skalierbar oder nicht-skalierbar, aufweist:

- Gebäudegrundfläche (skalierbar)
- Gebäudenutzfläche (skalierbar)
- Wärmekapazität (skalierbar)
- Außen-Temperaturen (skalierbar)
- Innen-Temperaturen (skalierbar)
- Gebäudeart (nicht-skalierbar)
- Standort (nicht-skalierbar)
- Art der Nutzung (nicht-skalierbar)
- Baujahr (nicht-skalierbar)
- Renovierung (nicht-skalierbar)
- Gebäudehöhe (nicht-skalierbar)

**9.** Verfahren nach einem der vorhergehenden Ansprüche,

- wobei das zu klassifizierende Lastprofil P in R separate zu klassifizierende Lastprofilabschnitte $P_r$ unterteilt wird, mit r=1,...,R und $\boldsymbol{R} \in \mathbf{N}\backslash\{0\}$, und
- wobei für jeden zu klassifizierenden Lastprofilabschnitt $P_r$ T Lastprofilabschnitte $\overline{P}_{j,t}$ aus besagter Datenbasis von J klassifizierten Lastprofilen $P_j$ mit derselben zeitlichen Länge wie der Lastprofilabschnitt $P_r$ und von korrespondierenden Lastprofilabschnitts-Skalierungsfaktoren $\beta_t$ so ausgewählt werden, dass der Betrag einer Differenz $\delta$ zwischen dem zu klassifizierenden Lastprofilabschnitt $P_r$ und einer Summe der T Lastprofilabschnitte $\overline{P}_{j,t}$, jeweils multipliziert mit dem korrespondierenden Lastprofilabschnitts-Skalierungsfaktor $\beta_k$, kleiner als ein vorgegebener Abschnitts-Schwellwert $S_r$ ist:

$$|P_r - \sum_{t=1}^{T} \overline{P}_{j,t}\,\beta_t| = \delta_r < S_r.$$

**10.** Verfahren nach Anspruch 9,
wobei die zu klassifizierenden Lastprofilabschnitte $P_r$ nach einem oder mehreren folgenden Kriterien gebildet werden: Tag / Nacht; Arbeitstag / Wochenende; Arbeitstag / arbeitsfreier Tag; Urlaubszeit / keine Urlaubszeit.

**11.** Verfahren nach einem der vorhergehenden Ansprüche, wobei ein oder mehr Lastprofile $P_j$ aus der Datenbasis von Lastprofilen $P_j$ jeweils in zwei oder mehr Unterlastprofile zerlegt werden und die auf diese Weise gewonnenen Unterlastprofile als eigenständige Lastprofile $P_j$ zu der Datenbasis von Lastprofilen $P_j$ hinzugefügt werden.

FIG 1

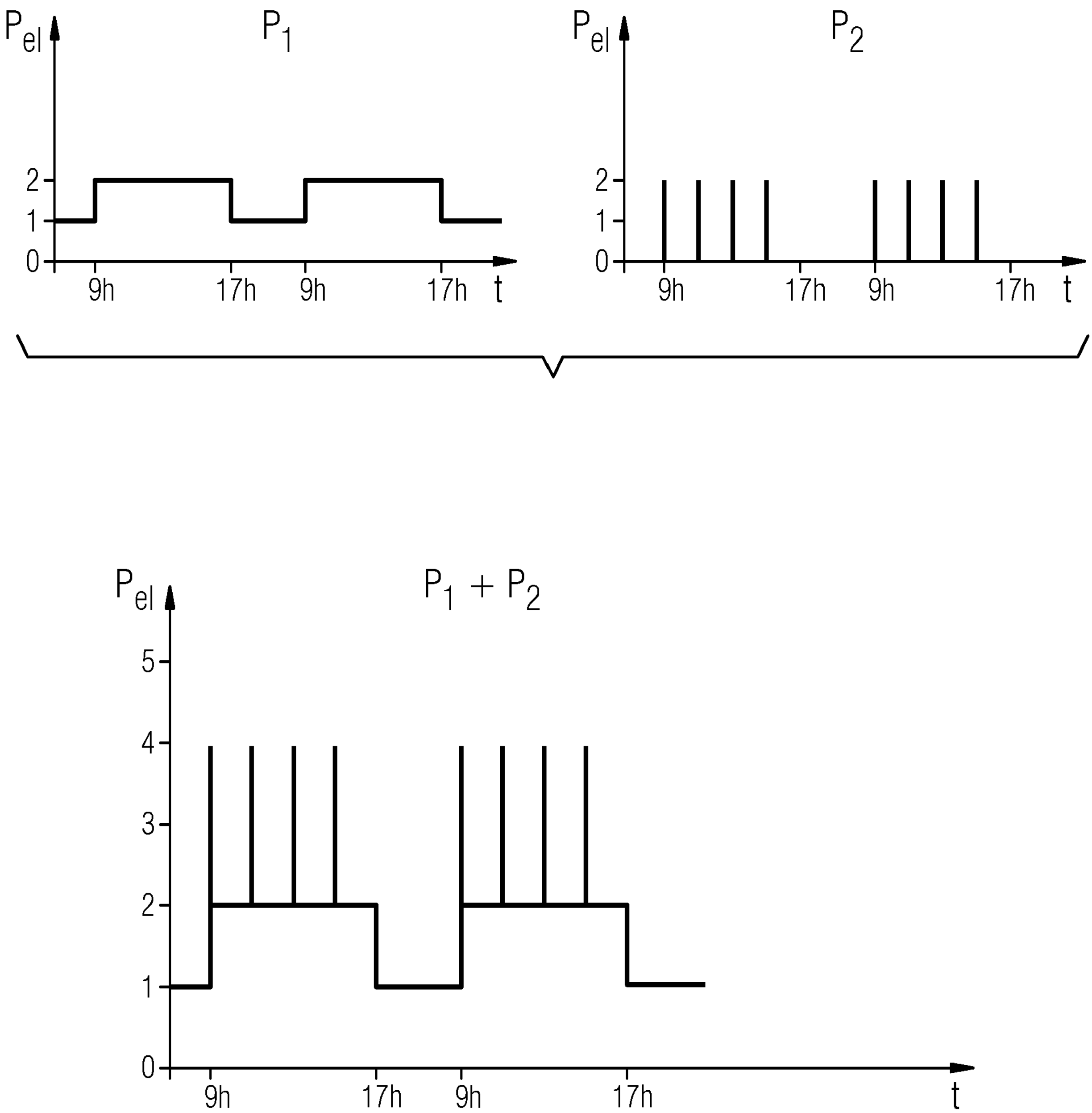

Pel
P1
2
1
0
9h
17h
9h
17h
t
Pel
P2
2
1
0
9h
17h
9h
17h
t
Pel
P1 + P2
5
4
3
2
1
0
9h
17h
9h
17h
t

FIG 2

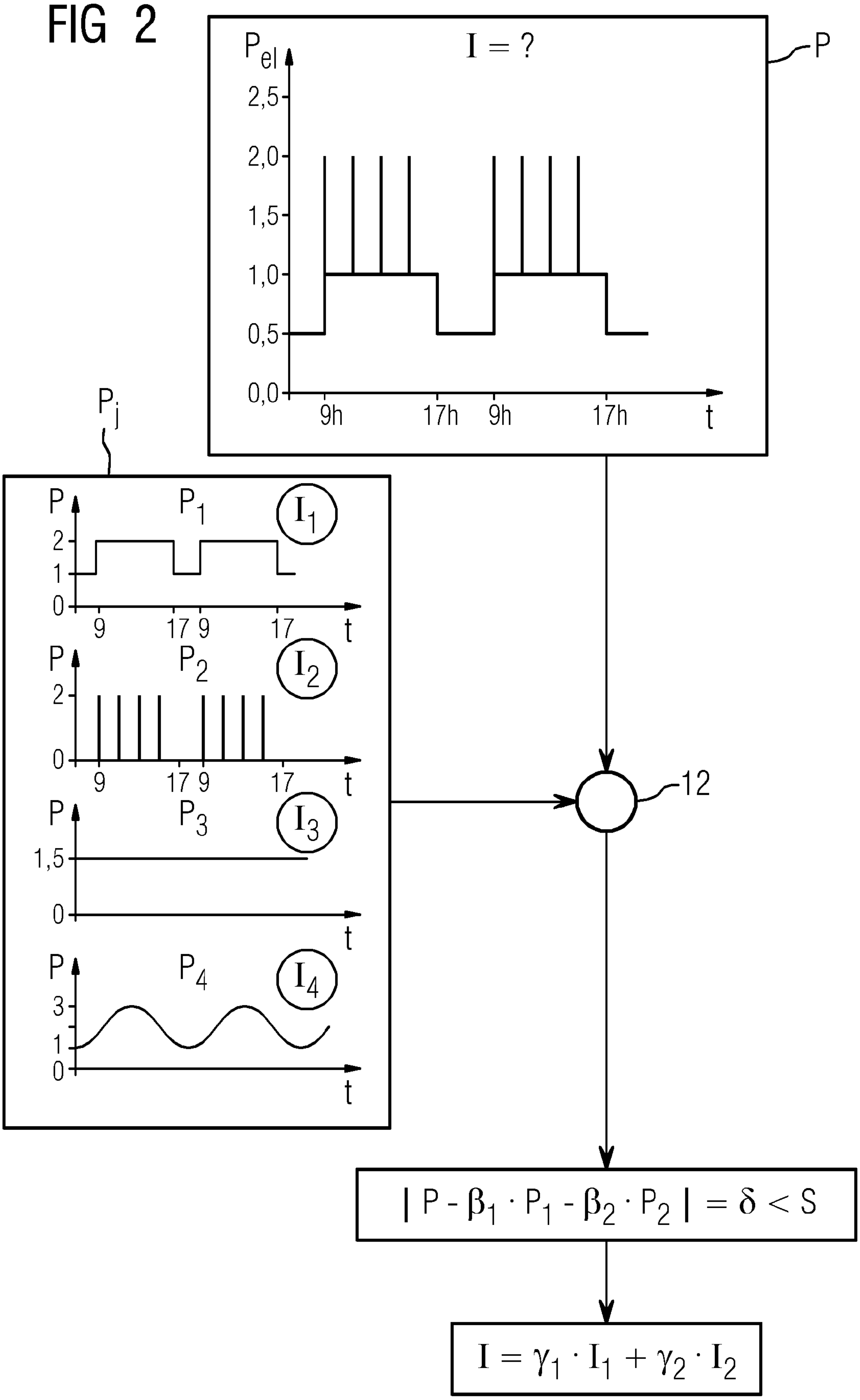
P
$P_{el}$
I = ?
2,5
2,0
1,5
1,0
0,5
0,0
9h
17h
9h
17h
t
$P_j$
P
$P_1$
$I_1$
2
1
0
9
17 9
17
t
P
$P_2$
$I_2$
2
0
9
17 9
17
t
P
$P_3$
$I_3$
1,5
0
t
P
$P_4$
$I_4$
3
1
0
t
12
$| P - \beta_1 \cdot P_1 - \beta_2 \cdot P_2 | = \delta < S$
$I = \gamma_1 \cdot I_1 + \gamma_2 \cdot I_2$

FIG 3

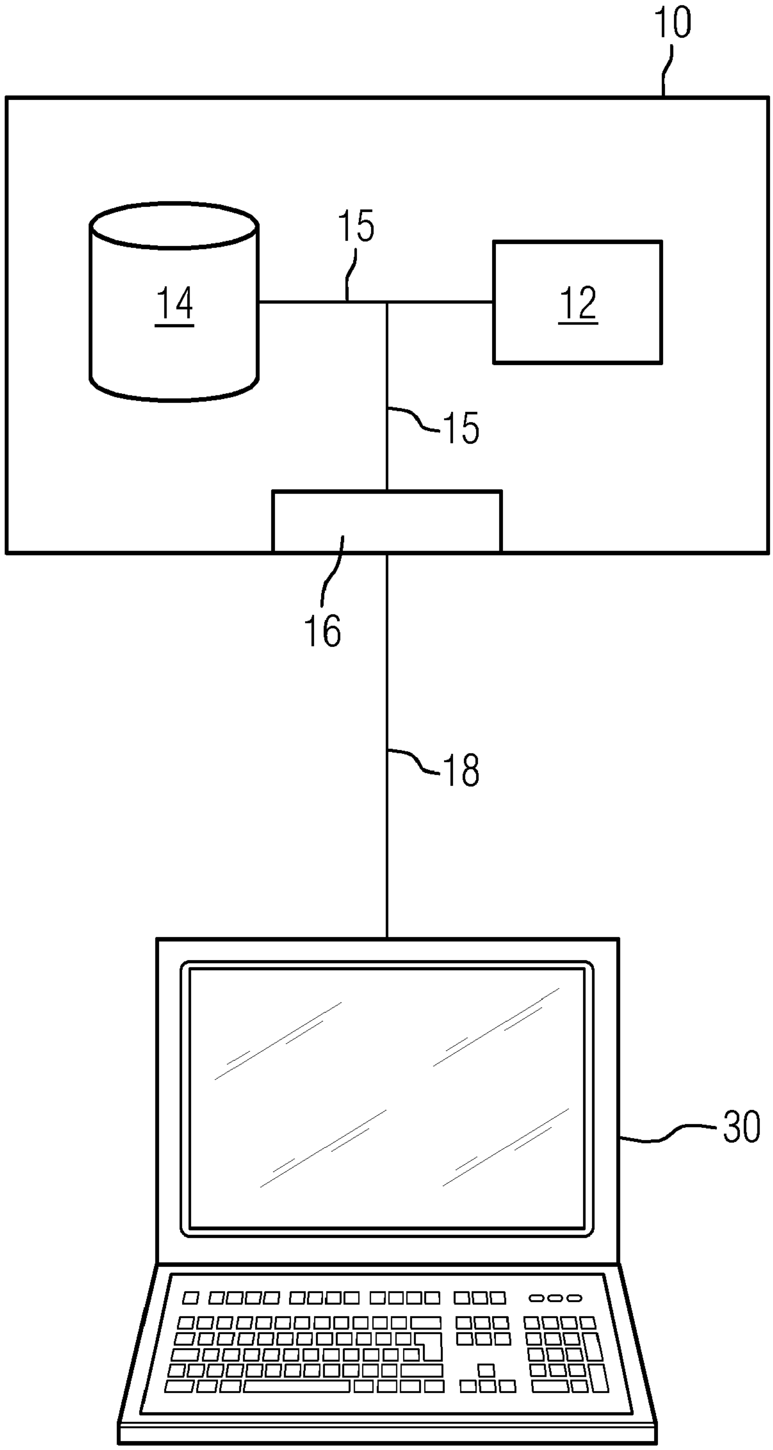

FIG 4

$$I = \gamma_1 \cdot \overset{\displaystyle I_{1,\,orig}}{\overset{\shortparallel}{\begin{pmatrix} ----- \\ ----- \\ I_{1,\,3,\,s} \\ ----- \end{pmatrix}}} + \gamma_2 \cdot \overset{\displaystyle I_{2,\,orig}}{\overset{\shortparallel}{\begin{pmatrix} I_{2,\,1,\,s} \\ ----- \\ ----- \\ ----- \end{pmatrix}}}$$

$$\Big\downarrow \; ZV$$

$$I = \gamma_1 \cdot \underset{\displaystyle I_{1,\,add}}{\underset{\shortparallel}{\begin{pmatrix} I_{1,\,1,\,s} \\ ----- \\ I_{1,\,3,\,s} \\ ----- \end{pmatrix}}} + \gamma_2 \cdot \underset{\displaystyle I_{2,\,add}}{\underset{\shortparallel}{\begin{pmatrix} I_{2,\,1,\,s} \\ ----- \\ I_{2,\,3,\,s} \\ ----- \end{pmatrix}}}$$

FIG 5

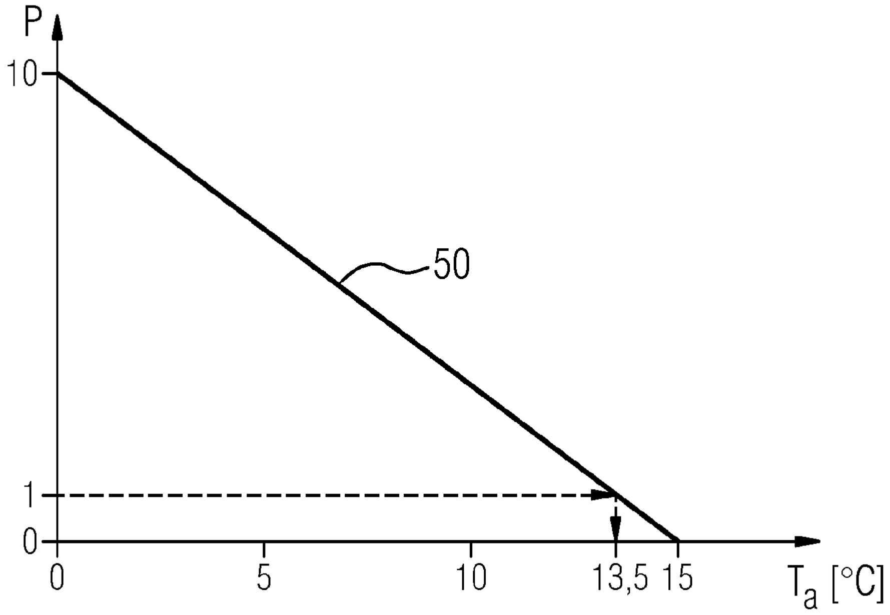


FIG 6

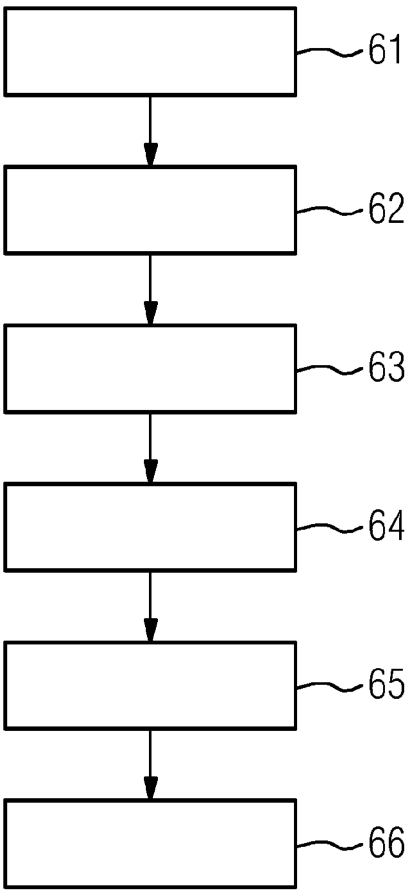

FIG 7

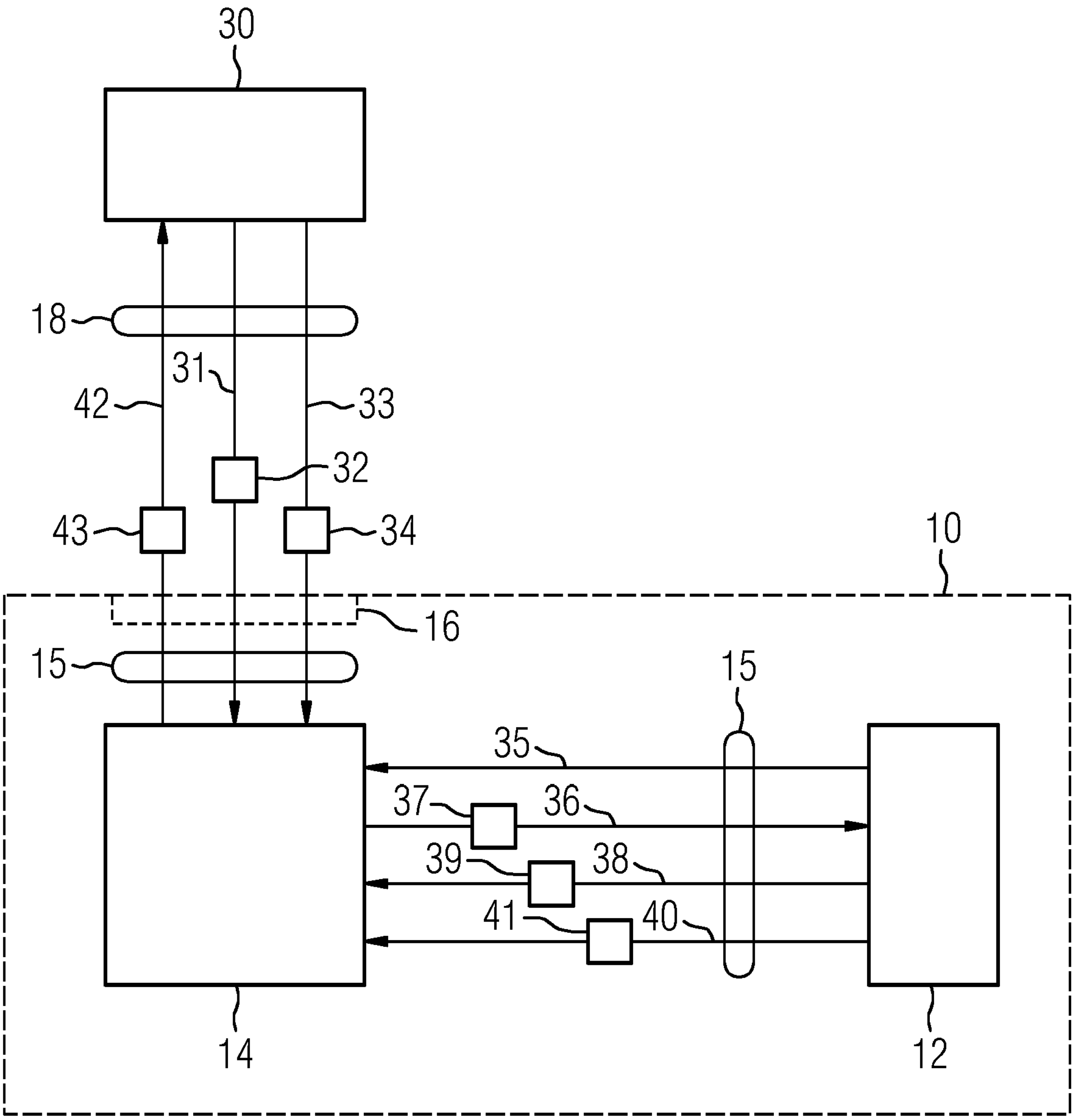

Europäisches Patentamt
European Patent Office
Office européen des brevets

# EUROPÄISCHER RECHERCHENBERICHT

Nummer der Anmeldung
EP 22 17 7710

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | DE 10 2020 201231 A1 (FRONIUS INT GMBH [AT]) 5. August 2021 (2021-08-05)<br>* Absätze [0037], [0044]; Anspruch 15; Abbildungen 3, 7, 8 *<br>----- | 1,2,8<br>3-7,9-11 | INV.<br>G01R21/133<br>G06K9/00<br>G06Q50/06<br>ADD.<br>H02J3/00 |
| | | | RECHERCHIERTE SACHGEBIETE (IPC) |
| | | | G01R<br>G01D<br>G06K<br>G06Q<br>H02J |

Der vorliegende Recherchenbericht wurde für alle Patentansprüche erstellt

1

| Recherchenort | Abschlußdatum der Recherche | Prüfer |
|---|---|---|
| München | 18. November 2022 | Sulic, Tomislav |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 22 17 7710

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-11-2022

| Im Recherchenbericht angeführtes Patentdokument | Datum der Veröffentlichung | Mitglied(er) der Patentfamilie | Datum der Veröffentlichung |
|---|---|---|---|
| DE 102020201231 A1 | 05-08-2021 | KEINE | |

EPO FORM P0461

Für nähere Einzelheiten zu diesem Anhang : siehe Amtsblatt des Europäischen Patentamts, Nr.12/82